# EUROPÄISCHE PATENTSCHRIFT

(11) **EP 3 391 724 B1**
(45) Veröffentlichungstag und Bekanntmachung des Hinweises auf die Patenterteilung: **29.01.2020**
(21) Anmeldenummer: 18165890.7
(22) Anmeldetag: 05.04.2018
(51) Int. Cl.: A01D 34/835, A01B 39/08

(54) **MULCHGERÄT ZUR BEARBEITUNG VON AUF EINEM FELD STEHENDEN PFLANZENSTÜMPFEN MIT VERSTELLBARER POSITION UND/ODER BODENANDRUCKKRAFT**
MULCHING DEVICE FOR PROCESSING PLANT STUMPS ON A FIELD WITH ADJUSTABLE POSITION AND/OR GROUND PRESSURE FORCE
APPAREIL DE PAILLAGE DESTINÉ AU TRAITEMENT DE SOUCHES DEBOUT DANS UN CHAMP AYANT UNE POSITION ET/OU FORCE D'APPUI AU SOL RÉGLABLE

(30) Priorität: 19.04.2017 DE 102017003739; 13.12.2017 DE 102017222587
(43) Veröffentlichungstag der Anmeldung: 24.10.2018
(73) Patentinhaber: Deere & Company, Moline, IL 61265 (US)
(72) Erfinder: Weitenberg, Clemens, 68163 Mannheim (DE); Effsing, Jürgen, 68163 Mannheim (DE); Awater, Klaus, 68163 Mannheim (DE); Schlamann, Michael, 68163 Mannheim (DE); Messing, Marco, 68163 Mannheim (DE); Hungerhoff, Bernd-Clint, 68163 Mannheim (DE)
(74) Vertreter: Holst, Sönke

(56) Entgegenhaltungen:
- WO-A1-2008/104816
- GB-A- 1 297 479
- US-A1- 2015 040 528

## Beschreibung

Unterhalb von Erntevorsätzen zur Maisernte werden in vielen Fällen Mulchgeräte zur Zerkleinerung und/oder Zerfaserung der nach der Ernte auf dem Feld verbleibenden Pflanzenstümpfe angebracht, sei es zur Schonung der Reifen der auf dem Feld fahrenden Fahrzeuge, zur Verbesserung der Verrottung der Pflanzenreste oder zur Vernichtung des Überwinterungsraumes des Maiszünslers (*Ostrinia nubilalis*).

Die DE 35 15 295 A1 zeigt einen Maispflücker mit einem derartigen Mulchgerät, das an einer antreibbaren, horizontalen Welle angeordnete Messer trägt. Die Welle ist innerhalb eines Gehäuses angeordnet, das vorderseitig um eine zur Welle parallele Achse schwenkbar am Rahmen des Maispflückers angelenkt ist und sich durch Kufen auf dem Boden abstützt. Die Schwenkbewegung des Gehäuses gegenüber dem Maispflücker nach unten wird durch eine an der Rückseite des Gehäuses und des Maispflückers angebrachte Kette begrenzt.

In der DE 39 34 862 A1 wird ein anderer Maispflücker mit den Reiheneinheiten nachgeordneten Stängelhäckslern gezeigt, die jeweils einen um die Hochachse rotierenden Rotor mit daran befestigten Messern zum Zerkleinern der Stängel umfassen. Die Rotoren sind in einem gemeinsamen Gehäuse eingebaut, das an seiner Vorderseite am Rahmen des Maispflückers um eine horizontale, quer zur Vorwärtsrichtung verlaufende Achse frei schwenkbar angelenkt ist und an seiner Rückseite über eine Kette und eine Zugfeder mit dem Rahmen des Maispflückers gekoppelt ist. Die maximale Auslenkbewegung des Stängelhäckslers nach unten ist durch einen weiteren Teil der Kette begrenzt.

In der DE 10 2004 020 447 A1 wird ein Mähvorsatz zur Ernte ganzer Maispflanzen gezeigt, an dessen Unterseite ein Mulchgerät mit um die Hochachse rotierenden Messern angebracht ist. Das Mulchgerät ist durch Parallelogrammlenker am Mähvorsatz höhenverstellbar angebracht und stützt sich durch Kufen am Erdboden ab. Der vertikale Bewegungsbereich des Mulchgeräts wird nach unten und oben durch eine Lasche mit einem Langloch begrenzt.

Die DE 10 2015 217 852 A1 beschreibt einen Erntevorsatz mit Mulchgeräten, die an ihrer Vorderseite um die Querachse schwenkbar am Erntevorsatz angelenkt sind und beim Verschwenken eines Seitenteils des Erntevorsatzes mittels einer Kette zwangsweise gegen den Erntevorsatz gezogen werden.

Die als gattungsbildend angesehene WO 2008/104816 A1 zeigt einen Maispflücker mit darunter angebrachten Mulchern, die mittels eines Hydraulikzylinders in eine angehobene und somit inaktive Stellung verbringbar sind.

### Aufgabe

Im Stand der Technik wird die Andruckkraft der (schwenkbar oder verschiebbar am Erntevorsatz angebrachten und sich durch Kufen auf dem Boden abstützenden) Mulchgeräte gegen den Boden bei der Stoppelbearbeitung demnach lediglich durch die Schwerkraft vorgegeben, wobei die DE 39 34 862 A1 noch eine Möglichkeit zur Verringerung dieser Andruckkraft mittels einer das Mulchgerät nach oben ziehenden Zugfeder bietet und die WO 2008/104816 A1 ein fremdkraftbetätigtes Ausheben der Mulcher beschreibt. Es wäre jedoch wünschenswert, diese Andruckkraft zur Anpassung an die jeweiligen Boden- und Erntegutbedingungen variieren und bei Bedarf auch größer einstellen zu können, als durch die Gewichtskraft des Mulchgeräts vorgegeben wird.

Ein weiterer Nachteil der bisherigen Aufhängungen der Mulchgeräte wird darin gesehen, dass es sich bei der üblichen vertikal verschiebbaren oder schwenkbaren Aufhängung um die Querachse am vorderen Ende und einer Begrenzung der Schwenkbewegung nach unten durch eine Kette oder ein Langloch nicht vermeiden lässt, dass das Mulchgerät auch dann in Bodenberührung bleibt, wenn der Erntevorsatz am Vorgewende angehoben wird. Dadurch wird einerseits das Vorgewende in unnötiger Weise durch das Mulchgerät bearbeitet, andererseits kann es zu Beschädigungen des Mulchgeräts kommen, wenn die Erntemaschine rückwärts fährt, denn das Mulchgerät wird sich dann zwangsweise in den Boden einarbeiten und die Kette abreißen.

Die vorliegende Erfindung hat sich zum Ziel gesetzt, ein gegenüber dem Stand der Technik verbessertes Mulchgerät, einen damit ausgestatteten Erntevorsatz sowie eine damit ausgestattete Erntemaschine bereitzustellen.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Erntemaschine umfasst einen Erntevorsatz und ein am Erntevorsatz angebrachtes Mulchgerät. Das Mulchgerät umfasst wenigstens ein mittels eines Antriebs in Bewegung versetzbares Bearbeitungswerkzeug zur Zerkleinerung von Pflanzenstümpfen, eine positionsverstellbar am Erntevorsatz anbringbare oder angebrachte Halterung des Bearbeitungswerkzeugs, und während des Erntebetriebs wirksame Mittel zur Kontrolle der Position der Halterung gegenüber dem Erntevorsatz und der Bodenandruckkraft der Halterung, welche einen fremdkraftbetätigten Aktor umfassen, der mit einer Steuerung zur Kontrolle des Aktors verbunden ist.

Die Steuerung ist mit einer Bedienerschnittstelle verbunden, mit welcher die vom Aktor auf die Halterung ausgeübte Kraft vorgebbar ist. Die Steuerung ist betreibbar, den Aktor derart anzusteuern, dass der Aktor mit der vorgegebenen Kraft auf die Halterung einwirkt.

Auf diese Weise kann die Bodenandruckkraft während des Erntebetriebs an die aktuellen Betriebsbedingungen angepasst werden, ohne dass es (wie in DE 39 34 862 A1) eines Absteigens des Bedieners von seinem Arbeitsplatz an der Erntemaschine bedarf. Auch kann die Halterung mit dem Bearbeitungswerkzeug bei Bedarf durch Bedienereingabe oder eine Automatik, z.B. im Vorgewende oder bei Rückwärtsfahrt der Erntemaschine, mittels des Aktors ausgehoben werden oder die Höhe des Bearbeitungswerkzeugs gegenüber dem Erntevorsatz bzw. dem Erdboden (und somit die Länge der im Boden verbleibenden Pflanzenstümpfe) verstellt werden. Das Bearbeitungswerkzeug kann in an sich bekannterWeise als stumpfes, schlagendes und/oder schneidendes Bearbeitungswerkzeug ausgeführt sein.

Die Halterung kann um eine quer zur Vorwärtsrichtung des Erntevorsatzes orientierte Achse am Erntevorsatz angelenkt oder anlenkbar sein, sich rückwärtig der Achse durch Führungsmittel, deren Bodenandruckkraft durch den Aktor vorgegeben wird, auf dem Boden abstützen und der Aktor den Schwenkwinkel der Halterung um die Achse kontrollieren. Bei einer derartigen Ausführungsform kann der Antrieb des Bearbeitungswerkzeugs mittels einer es antreibenden Welle erfolgen, die ebenfalls um die sich quer zur Vorwärtsrichtung und horizontal erstreckende Achse (gegenüber dem Erntevorsatz) frei drehbar gelagert ist. Die Halterung und die an der Halterung drehbar gelagerte Welle werden somit durch die Führungsmittel gegenüber dem Boden ihre Betriebsstellung ausgerichtet. Alternativ zur erwähnten Verschwenkung um die Querachse kann die Halterung mit dem Bearbeitungswerkzeug in vertikaler Richtung verschiebbar gelagert sein, insbesondere durch eine Parallelogrammaufhängung. Der Aktor gibt bei dieser Ausführungsform ebenfalls die vertikale Position und/oder die Andruckkraft der Halterung vor.

Weiterhin kann die Steuerung mit Signalen von einer Höhensteuerung des Erntevorsatzes und/oder einer Vortriebssteuerung der den Erntevorsatz tragenden Erntemaschine und/oder einem Geschwindigkeitssensor zur Erfassung der Vortriebsgeschwindigkeit der den Erntevorsatz tragenden Erntemaschine beaufschlagbar und betreibbar sein, bei Ausheben des Erntevorsatzes und/oder Rückwärtsfahrt der Erntemaschine und/oder Unterschreiten einer vorgegebenen Mindestvortriebsgeschwindigkeit der Erntemaschine selbsttätig zu veranlassen, dass der Aktor das Mulchgerät gegenüber dem Erntevorsatz in eine gegenüber der beim Erntebetrieb eingenommenen Betriebsposition angehobene Außerbetriebsposition verbringt und/oder die Höhensteuerung des Erntevorsatzes zu kommandieren, den Erntevorsatz anzuheben. Demnach wird das Mulchgerät selbsttätig ausgehoben, sobald der Erntevorsatz durch die Höhensteuerung angehoben wird (z.B. im Vorgewende durch eine automatische Vorgewendesteuerung oder manuelle Fahrereingabe) und/oder die Erntemaschine rückwärts oder langsamer als mit der Mindestvortriebsgeschwindigkeit fährt. Alternativ oder zusätzlich kann zumindest bei rückwärts oder langsamer als mit der Mindestvortriebsgeschwindigkeit fahrender Erntemaschine der Erntevorsatz ausgehoben werden. Auf diese Weise wird verhindert, dass sich das Mulchgerät im Boden verhakt.

Der Aktor kann ein pneumatischer oder hydraulischer Zylinder sein.

Bei einer möglichen Ausführungsform sind ein oder mehrere Bearbeitungswerkzeuge um eine sich während des Betriebs etwa vertikal oder horizontal (z.B. in Vorwärtsrichtung oder quer zur Vorwärtsrichtung) erstreckende oder um eine nach hinten und oben geneigte Achse an der Halterung drehbar angebracht und durch den Antrieb in Rotation verbringbar. Die nach oben und hinten geneigte Drehachse hat den Vorteil, dass die erste Bearbeitung der Pflanzenstümpfe durch das Bearbeitungswerkzeug bei ersten Auftreffen auf einen Pflanzenstumpf in einer ersten Höhe erfolgt, die durch den Neigungswinkel der Drehachse nach hinten, die Höhe der Drehachse über dem Boden, den Durchmesser des Bearbeitungswerkzeugs und den seitlichen Versatz zwischen der Drehachse und dem Pflanzenstumpf bedingt ist. Der Pflanzenstumpf wird demnach ein erstes Mal bearbeitet. Wird das Mulchgerät nun weiter in der Vorwärtsrichtung über das Feld bewegt, kann der Pflanzenstumpf zumindest noch ein zweites Mal durch das Bearbeitungswerkzeug bearbeitet werden, wenn er rückwärtig der Drehachse mit dem Bearbeitungswerkzeug in Berührung kommt. Dieser Vorgang findet aufgrund der Neigung der Drehachse in einer zweiten Höhe statt, die kleiner als die erste Höhe ist. Wenn das Bearbeitungswerkzeug die Pflanzenstümpfe nicht nur an seinem äußeren Ende, sondern auch zwischen der Drehachse und dem äußeren Ende bearbeiten kann (z.B. wie ein Rasenmähermesser, d.h. mit einer radialen Schneidkante, ausgeführt ist oder mehrere, unterschiedlich lange Arme mit endseits befestigten Schlagkörpern umfasst), kann es sogar mehr als zweimal mit den Pflanzenstümpfen zusammenwirken.

Ein Erntevorsatz kann mehrere Ernteeinheiten aufweisen, denen jeweils ein separat positionsverstellbares und mit jeweils einem Aktor ausgestattetes Mulchgerät zugeordnet ist. Bei dem Erntevorsatz kann es sich um einen Maispflücker oder einen Mähvorsatz zur Ernte ganzer Maispflanzen handeln. Eine grobe Höhenführung des Erntevorsatzes kann durch eine an sich bekannte, auf Fühlern basierende Höhensteuerung erfolgen, mit welcher der Erntevorsatz mit dem Einzugskanal gegenüber der Erntemaschine um eine seitlich verlaufende Achse verschwenkt wird.

Seitenteile des Erntevorsatzes können durch einen Verstellantrieb in eine Transportposition verbringbar sein und die Steuerung mit Signalen vom Verstellantrieb beaufschlagt werden und betreibbar sein, bei Verbringen der Seitenteile des Erntevorsatzes in die Transportposition selbsttätig zu veranlassen, dass die Aktoren ihre Mulchgeräte gegenüber dem Erntevorsatz in eine Außerbetriebsposition verbringen.

### Ausführungsbeispiel

In den Zeichnungen werden zwei nachfolgend näher beschriebene Ausführungsbeispiele dargestellt. Es zeigen:
- Fig. 1: eine Seitenansicht einer Erntemaschine mit einem daran angebrachten Erntevorsatz, an dem Mulchgeräte angebracht sind,
- Fig. 2: eine Seitenansicht des Erntevorsatzes bei der Ernte,
- Fig. 3: eine perspektivische Ansicht des Mulchgeräts,
- Fig. 4: eine Draufsicht auf den Erntevorsatz,
- Fig. 5: ein Schema einer ersten Ausführungsform der Steuerung der Aktoren der Mulchgeräte, und
- Fig. 6: ein Schema einer zweiten Ausführungsform der Steuerung der Aktoren der Mulchgeräte.

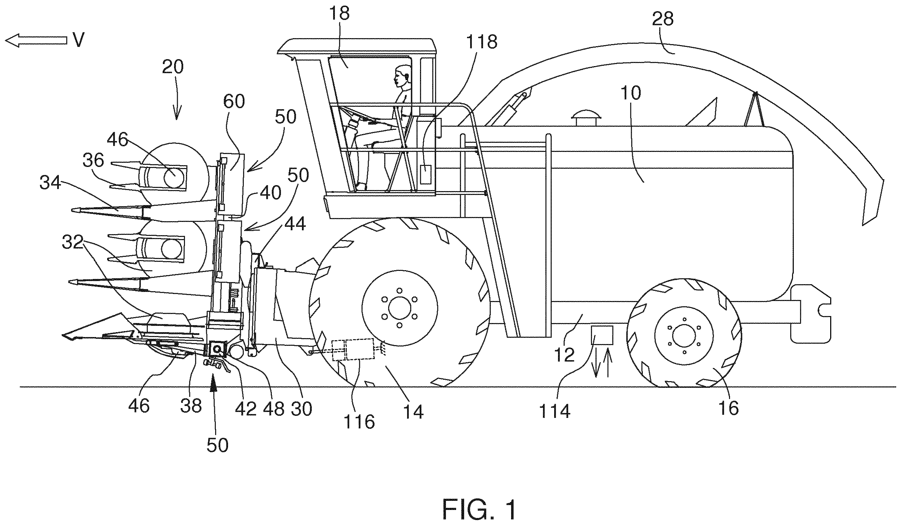

Eine in der Figur 1 gezeigte landwirtschaftliche Erntemaschine 10 in der Art eines selbstfahrenden Feldhäckslers baut sich auf einem Rahmen 12 auf, der von vorderen und rückwärtigen Rädern 14 und 16 getragen wird. Die vorderen Räder 14 dienen als Hauptantriebsräder, während die rückwärtigen Räder 16 lenkbar sind. Die Bedienung der Erntemaschine 10 erfolgt von einer Fahrerkabine 18 aus, von der aus ein Erntevorsatz 20 einsehbar ist. Mittels des Erntevorsatzes 20 vom Boden aufgenommenes Gut, z. B. Mais, wird über ein Einzugsgehäuse 30 einer nicht eingezeichneten Häckseltrommel im Innern der Erntemaschine 10 zugeführt, die es in kleine Stücke häckselt und es einer (ebenfalls nicht eingezeichneten) Fördervorrichtung aufgibt. Das Gut verläßt die Erntemaschine 10 zu einem nebenher fahrenden Anhänger über einen um die Hochachse drehbaren und höhenverstellbaren Auswurfkrümmer 28. Zwischen der Häckseltrommel und der Fördervorrichtung kann eine nicht eingezeichnete Nachzerkleinerungsvorrichtung angeordnet sein. Obwohl die Erfindung hier an einem Feldhäcksler dargestellt wird, kann sie auch an Mähdreschern mit zugehörigen Erntevorsätzen in Form von Maispflückern Verwendung finden. Im Folgenden beziehen sich Richtungsangaben, wie vor, hinter, seitlich und oberhalb auf die Vorwärtsrichtung der Erntemaschine 10 und des Erntevorsatzes 20, die in der Figur 1 nach links verläuft.

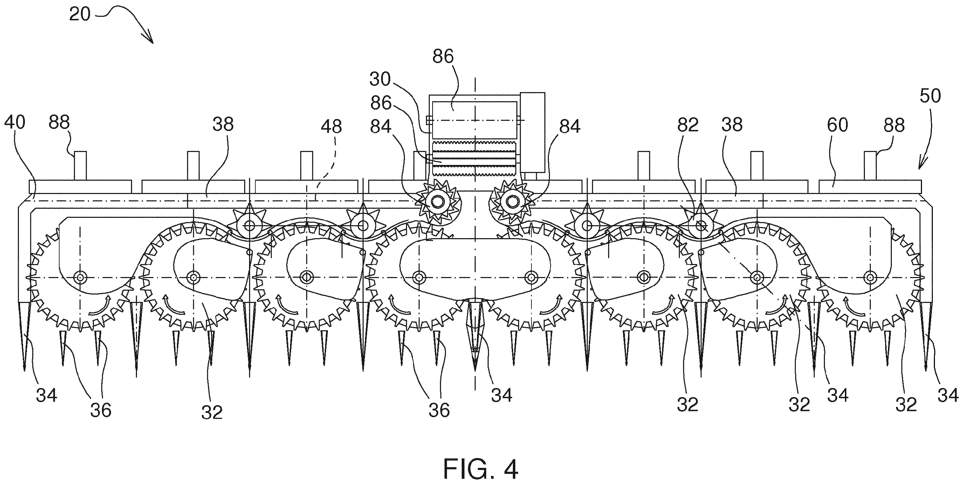

Zum Aufnehmen des Ernteguts dient der Erntevorsatz 20, der in Vorwärtsrichtung an der Frontseite der Erntemaschine 10 befestigt ist. Der Erntevorsatz 20 ist in der der dargestellten Ausführungsform ein an sich bekannter Maismähvorsatz, der einen Mittelteil 38 und zwei (bezüglich der Vorwärtsrichtung der Erntemaschine 10) seitlich links und rechts neben dem Mittelteil 38 angeordneten Seitenteile 40 umfasst. Die Seitenteile 40 sind zum Straßentransport nach oben schwenkbar am Mittelteil 38 befestigt und können zum Ernteeinsatz hydraulisch heruntergeschwenkt werden, so dass sie beim Erntebetrieb parallel zum Mittelteil 38 verlaufen. Anschließend können sie wieder hinauf geschwenkt werden. Die Figur 1 zeigt die Seitenteile 40 in hochgeschwenktem Zustand, während sie in der Figur 4 in der heruntergeschwenkten Ernteposition gezeigt werden. Am Mittelteil 38 sind in der vorliegenden Ausführungsform vier Ernteeinheiten 32 mit unteren Schneidscheiben zum Abschneiden der Pflanzen und oberen Förderscheiben zum Abtransport der Pflanzen angebracht, während an beiden Seitenteilen 40 jeweils zwei Ernteeinheiten 32 angebracht sind. Der Erntevorsatz 20 ist in an sich bekannter Weise mit Halmteilern 36, den Ernteeinheiten 32, Teilerspitzen 34, Abdeckplatten und Fördermitteln ausgestattet, um das geerntete Gut der Häckseltrommel der Erntemaschine 10 zuzuführen. Der Erntevorsatz 20 zieht im Betrieb die Stängel des Mähguts in aufrechter Stellung ein, schneidet sie ab und führt sie (vgl. Figur 4) über Querfördertrommeln 82 und Abgabefördertrommeln 84 dem mit Einzugswalzen 86 ausgestatteten Einzugsgehäuse 30 und anschließend der Häckseltrommel der Erntemaschine 10 zu.

Der Erntevorsatz 20 umfasst einen Trägerrahmen, der einen unteren Querträger 42 und einen oberen Querträger 44 aufweist. Der untere Querträger 42 erstreckt sich unten an der Rückseite des Erntevorsatzes 20 und umfasst drei Segmente, von denen jeweils eines dem Mittelteil 38 und eines jedem Seitenteil 40 zugeordnet ist. An der Vorderseite des unteren Querträgers 42 sind Getriebegehäuse 46 angeschraubt, die zum Antrieb jeweils einer Ernteeinheit 32 dienen. Eine Antriebswelle 48 zum Antrieb der Ernteeinheiten 32 über in den Getriebegehäusen 46 angeordnete Getriebe, die auch zum Antrieb der weiteren Fördermittel des Erntevorsatzes 20 dient und von einer Abtriebswelle der Erntemaschine 10 angetrieben wird, erstreckt sich in seitlicher Richtung innerhalb des hohlen unteren Querträgers 42.

Der obere Querträger 44 erstreckt sich in seitlicher Richtung oberhalb des Einlasses des Einzugsgehäuses 30 über dessen Breite. Er ist mit hakenförmigen Tragelementen verbunden, die von komplementären Tragelementen des Einzugsgehäuses 30 teilweise Untergriffen werden und zur Befestigung des Erntevorsatzes 20 an der Erntemaschine 10 dienen. Er ist durch sich vertikal erstreckende Träger und Verbindungsbleche mit dem unteren Querträger 42 verbunden. Der Trägerrahmen mit den Querträgern 42, 44 und den sich vertikal erstreckenden Trägern und Verbindungsblechen bildet somit ein Skelett des Erntevorsatzes 20, das alle weiteren Elemente des Erntevorsatzes 20 trägt.

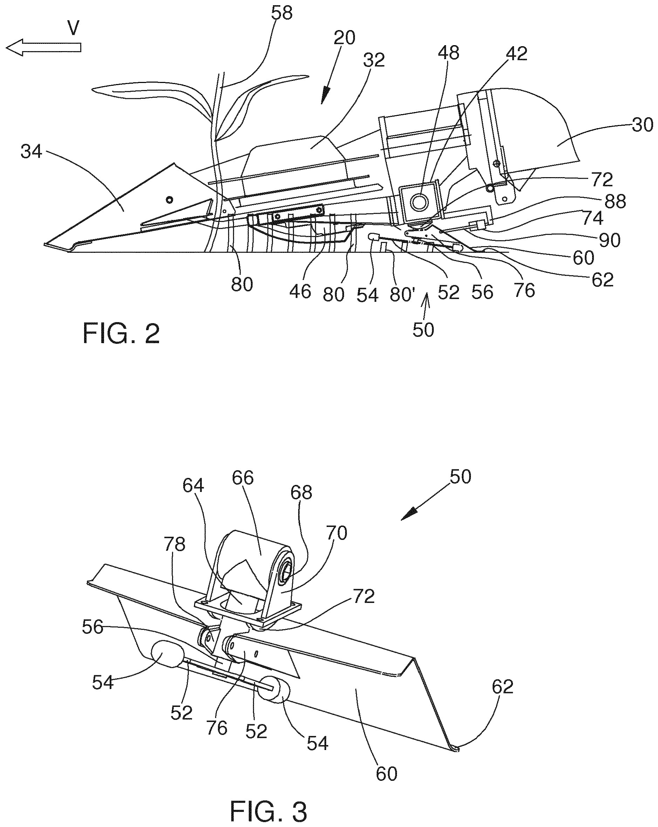

Die Figur 2 zeigt den Erntevorsatz 20 in einer Position, die er beim Ernten einnimmt, wofür das Einzugsgehäuse 30 durch einen von einer Höhensteuerung 118 kontrollierter Aktor 116 um die Drehachse der Häckseltrommel aus der in Figur 1 gezeigten Transportposition abgesenkt wird. Dieser Aktor kontrolliert auch die Höhe des Erntevorsatzes 20 über dem Boden, in einer an sich bekannten, auf Fühlern basierenden Weise. Ein Geschwindigkeitssensor 114, der insbesondere als Radarsensor ausgeführt sein kann, erfasst die Vortriebsgeschwindigkeit der Erntemaschine 10.

Rückwärtig jeder Ernteeinheit 32 ist jeweils ein Mulchgerät 50 angebracht. Das Mulchgerät 50 ist mit seiner Drehachse in seitlicher Richtung rückwärtig von der Drehachse der zugehörigen Ernteeinheit 32 angeordnet. Dort laufen im normalen Erntebetrieb die Pflanzen ein. Falle eine Ernteeinheit 32 mehrere Pflanzenreihen aberntet, können ihr mehrere Mulchgeräte 50 zugeordnet werden, deren Drehachsen rückwärtig der zu erwartenden Einlaufstellen der Pflanzenreihen angeordnet sind. Es wäre auch denkbar, die Mulchgeräte 50 lückenlos oder mit kleinen Lücken über die ganze Arbeitsbreite des Erntevorsatzes 20 zu verteilen.

Es wird nun auf die Figuren 2 und 3 verwiesen. Das Mulchgerät 50 umfasst zwei sich diametral gegenüber liegende Bearbeitungswerkzeuge 54, die über radiale Arme 52 starr mit einer mittigen Welle 56 verbunden sind. Anstelle starrer Arme 52 könnten die Bearbeitungswerkzeuge 54 auch durch Ketten oder andere, flexible Elemente mit der Welle 56 verbunden sein. Die Bearbeitungswerkzeuge 54 sind als stumpfe Schlagkörper ausgeführt, d.h. kugel- oder zigarrenförmig geformt. Als Bearbeitungswerkzeuge 54 könnten alternativ oder zusätzlich schneidende Messer verwendet werden, wie sie üblicherweise unter Maispflückern eingebaut werden. Diese Messer können starr oder pendelnd mit der Welle 56 verbunden werden.

Die Welle 56 ist an ihrem unteren Ende mit den Armen 52 verbunden und an ihrem oberen Ende in einem Getriebe 66 gelagert. Durch eine Hohlwelle 68 des Getriebes 66 erstreckt sich die Antriebswelle 48 und ist formschlüssig mit der sechseckigen Hohlwelle 68 gekoppelt. Das Getriebe 66 enthält Antriebselemente (nicht gezeigt), welche die Hohlwelle 68 mit der Welle 56 antriebsmäßig verbinden, z.B. Kegelräder. Das Getriebe 66 ist gegenüber der Antriebswelle 48 und dem unteren Querträger 42 um die Achse der Antriebswelle 48 frei schwenkbar gelagert.

Weiterhin ist eine das Getriebe 66 von den beiden Seiten her umschließende Konsole 70 starr mit dem unteren Querträger 42 verbunden. Ein unteres, die beiden seitlich am Getriebe 66 anliegenden Bleche der Konsole 70 verbindendes Blech ist an seiner Unterseite mit einem Anschlagelement 72 verbunden, das im Zusammenwirken mit einem Abdeckblech 60 dazu dient, den Bewegungsbereich der Welle 56 und somit der Bearbeitungswerkzeuge 54 einzuschränken und Kollisionen mit anderen Teilen des Erntevorsatzes 20 zu vermeiden.

Am Gehäuse des Getriebes 66 ist eine Hohlachse 64 angebracht, welche die Welle 56 zwischen dem Getriebe 66 und einem unteren, geringfügig oberhalb der Arme 52 liegenden Ende konzentrisch umschließt. Die Hohlachse 64 ist mit dem Getriebe 66 und der Welle 56 frei gegenüber dem unteren Querträger 42 um die Längsachse der Antriebswelle 48 schwenkbar. An ihrem unteren Ende trägt die Hohlachse 64 einen Flansch 78, an dem eine Längsstrebe 76 angebracht ist. Die Längsstrebe 76 ist starr mit dem Abdeckblech 60 verbunden. Das Abdeckblech 60 erstreckt sich über die Breite des Mulchgeräts 50 und ist etwas breiter als der Durchmesser des von den Bearbeitungswerkzeugen 54 beschriebenen Hüllkreises. Das Abdeckblech 60 erstreckt sich in Vorwärtsrichtung V von der Mitte der Hohlachse 64 und von dort schräg nach hinten und unten bis zu einer rückwärtigen Kufe 62, die auf dem Boden aufliegt. Zur Anpassung an die Ebenheit des Bodens kann die Kufe 62 gegenüber dem Abdeckblech 60 (und/oder das Abdeckblech 60 gegenüber der Hohlachse 64) verstellbar sein, um die Bearbeitungswerkzeuge 54 in ihrer rückwärtigen Stellung bei ebenerem Boden weiter nach unten zu stellen als bei unebenerem Boden.

Ein Aktor 74 ist mit seinem rückwärtigen Ende um eine sich in Querrichtung erstreckende Achse schwenkbar mit einem Haltearm 88 verbunden, der sich vom unteren Querträger 42 nach hinten erstreckt. Der vordere, bewegliche Teil 90 des Aktors 74 ist ebenfalls eine sich in Querrichtung erstreckende Achse schwenkbar mit dem Abdeckblech 60 gekoppelt. Der Aktor 74, der als pneumatischer oder hydraulischer Zylinder ausgeführt sein kann, definiert demnach die Schwenkposition der Hohlachse 64, die gemeinsam mit den Armen 52, der Welle 56, dem Getriebe 66, dem Flansch 78, der Längsstrebe 76 und dem Abdeckblech 60 als Halterung des Bearbeitungswerkzeugs 54 angesehen werden kann, um die Mittelachse der Antriebswelle 48 und somit die Position des Bearbeitungswerkzeugs 54 gegenüber dem Boden. Zudem definiert der Aktor 74 die Andruckkraft, mit welcher die Kufe 62 sich auf dem Boden abstützt. Die Kufe 62 dient hier als Führungsmittel, auf welcher sich die Halterung (mittelbar) auf dem Boden abstützt.

Nach alledem ergibt sich folgende Wirkungsweise: Der Aktor 74 drückt, wenn seine Kolbenkammer mit Druck beaufschlagt wird, das Abdeckblech 60 und somit auch die Kufe 62 nach unten, bis diese Bodenkontakt hat. Das Abdeckblech 60 dreht über die Längsstrebe 76, den Flansch 78 und die Hohlachse 64 auch das Getriebe 66 um die Längsachse der Antriebswelle 48. Diese Drehung wird über das Getriebe 66, die Welle 56 und die Arme 52 schließlich auch auf die Bearbeitungswerkzeuge 54 übertragen. Die durch die Welle 56 definierte Drehachse, um welche die Bearbeitungswerkzeuge 54 im Betrieb rotieren, ist, wie in der Figur 2 gezeigt, nach hinten und oben geneigt. Dadurch erreicht man, dass die Pflanzenstümpfe 80 der geernteten Pflanzen 58, deren Höhe zunächst durch die Höhe der Schneidscheiben der Ernteeinheiten 32 über dem Boden vorgegeben ist, im vorderen Bereich des Mulchgeräts 50 ein erstes Mal durch ein Bearbeitungswerkzeug 54 erfasst werden. Die dann noch im Boden verbleibenden, bereits bearbeiteten und gekürzten (abgeschlagenen) Pflanzenstümpfe 80' werden anschließend noch ein zweites Mal im rückwärtigen Bereich des Mulchgeräts 50 durch eines der Bearbeitungswerkzeuge 54 bearbeitet und in Bodennähe abgeschlagen. Demnach wird die Bearbeitungsqualität der Pflanzenstümpfe 80' wesentlich verbessert. Um die Wirkung noch weiter zu verbessern, könnte man die vorlaufenden Kanten der Arme 52 mit Schneiden ausstatten. Die beschriebene Bodenanpassung erfolgt für jedes Mulchgerät 50 des Erntevorsatzes 20 getrennt voneinander.

Ein weiterer Vorteil der frei pendelnden Aufhängung der Welle 56 und der Bearbeitungswerkzeuge 54 und ihrer bodenkonturenfolgenden Positionssteuerung mittels der Kufe 62 liegt darin, dass die Bearbeitungswerkzeuge 54 bei geeigneter Drehrichtung der Welle 56, in dem Fall, dass sie sich in unbeabsichtigter Weise in den Boden oder einen Erdhaufen eingearbeitet haben, aufgrund des in diesem Fall entstehenden Drehmoments, das die Bearbeitungswerkzeuge 54 aufgrund des Antriebs über die Welle 56 auf den Boden ausüben, die Welle 56 um die Längsachse der Antriebswelle 48 nach hinten und oben drehen und sich somit selbsttätig aus dem Boden befreien. Die geeignete Drehrichtung ist bei der nach vorn und unten geneigten Drehrichtung der Welle 56 bei Betrachtung von oben hin im Uhrzeigersinn. Für den Fall, dass keine Bearbeitung der Pflanzenstümpfe 80 beabsichtigt sein sollte, kann das Mulchgerät 50 vom Erntevorsatz 20 abgebaut werden oder die Welle 56 wird durch eine Kupplung o.ä. von der Antriebswelle 48 getrennt oder die Arme 52 von der Welle 56 abgebaut.

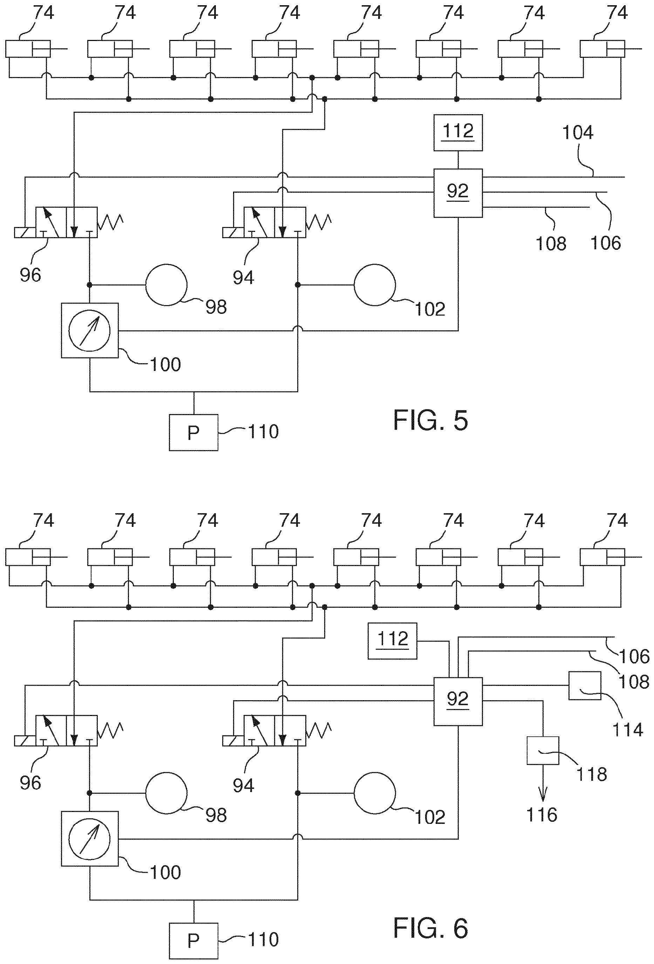

Die Figur 5 zeigt ein Schema einer ersten Ausführungsform einer möglichen Verschaltung der pneumatischen Aktoren 74. Eine Druckquelle 110 in Form eines Kompressors stellt unter Druck stehende Luft bereit, die über einen elektromechanisch verstellbaren Druckminderer 100 in einen ersten Vorratsbehälter 98 und an ein erstes elektromechanisches Ventil 96 gelangt. Das erste Ventil 96 ist ausgangsseitig mit den Kolbenkammern aller der Aktoren 74 verbunden. Die unter Druck stehende Luft von der Druckquelle 110 wird zudem einem zweiten Vorratsbehälter 102 und einem zweiten, elektromechanischen Ventil 94 zugeführt. Das zweite Ventil 94 ist ausgangsseitig mit den Kolbenstangenkammern aller der Aktoren 74 verbunden. Eine Steuerung 92 kontrolliert die Ventile 94, 96 und den Druckminderer 100 und ist mit einer Bedienerschnittstelle 112 verbunden. Zudem erhält die Steuerung 92 Signale von einer ersten Leitung 104, einer zweiten Leitung 106 und einer dritten Leitung 108. Die in der Figur 5 gezeigten Komponenten können erntevorsatzseitig oder (mit Ausnahme der Aktoren 74 und der zu ihnen führenden Leitungen) erntemaschinenseitig oder teils erntemaschinen- und teils erntevorsatzseitig angeordnet sein.

Die mit einer Vortriebssteuerung der Erntemaschine 10 gekoppelte, erste Leitung 104 signalisiert der Steuerung 92, ob der Bediener der Erntemaschine 10 eine Eingabe gemacht hat, um die Erntemaschine 10 rückwärts zu bewegen. Die mit einer Steuerung des Verstellantriebs der Seitenteile 40 gekoppelte, zweite Leitung 106 signalisiert der Steuerung 92, ob der Bediener der Erntemaschine 10 eine Eingabe gemacht hat, die Seitenteile 40 in die angehobene Transportposition zu verbringen. Die mit einer Höhensteuerung des Erntevorsatzes 20 gekoppelte, dritte Leitung 108 signalisiert der Steuerung 92, ob der Bediener der Erntemaschine 10 (oder eine Vorgewendeautomatik) eine Eingabe gemacht hat, den Erntevorsatz 20 am Vorgewende auszuheben. Sollte demnach an einer oder mehrerer der erwähnten Leitungen 104 bis 108 ein Signal anliegen, das darauf hinweist, dass die Erntemaschine 10 rückwärts fahren und/oder die Seitenteile 40 angehoben und/oder der Erntevorsatz 20 ausgehoben werden soll und/oder ein Ernte/Transportbetriebsschalter sich in der Stellung für Straßenfahrt befindet, wird die Steuerung 92 das erste Ventil 96 schließen und das zweite Ventil 94 öffnen, um die Aktoren 74 anzuweisen, die Mulchgeräte 50 anzuheben. Sollte hingegen der Steuerung 92 kein derartiges Signal vorliegen und der Ernte/Transportbetriebsschalter sich in der Stellung für Erntebetrieb befinden, sodass man davon ausgehen kann, dass sich die Erntemaschine 10 im normalen Erntebetrieb befindet, wird die Steuerung 92 das erste Ventil 96 öffnen und das zweite Ventil 94 schließen, um die Aktoren 74 anzuweisen, die Mulchgeräte 50 mit einem mittels der Bedienerschnittstelle 112 eingebbaren, über den Druckminderer 100 von der Steuerung 92 kontrollierten Bodenandruckkraft der Kufen 62 auf dem Boden laufen zu lassen und die Pflanzenstümpfe 80 zu bearbeiten. Sollte hingegen keine Bearbeitung der Pflanzenstümpfe 80 gewünscht sein, kann der Bediener über die Bedienerschnittstelle 112 die Steuerung 92 veranlassen, das erste Ventil 96 zu schließen und das zweite Ventil 94 zu öffnen, um die Mulchgeräte 50 anzuheben.

Die Figur 6 zeigt ein Schema einer zweiten Ausführungsform einer möglichen Verschaltung der pneumatischen Aktoren 74. Mit der ersten Ausführungsform der Figur 5 gleichartige Elemente sind mit denselben Bezugszeichen gekennzeichnet. Im Unterschied zur ersten Ausführungsform der Figur 5 ist die Steuerung 92 mit dem Geschwindigkeitssensor 114 verbunden und so programmiert, dass sie ein Anheben der Mulchgeräte 50 durch die Aktoren 74 in dem Fall veranlasst, dass die Signale des Geschwindigkeitssensors 114 darauf hinweisen, dass die Erntemaschine 10 mit einer unterhalb einer vorbestimmten Mindestgeschwindigkeit von z.B. 1 km/h liegenden Vortriebsgeschwindigkeit fährt oder steht oder rückwärts fährt. Analog kann die Steuerung 92 so programmiert sein, dass ein Absenken der Mulchgeräte 50 im Erntebetrieb erst dann erfolgt, wenn die die Signale des Geschwindigkeitssensors 114 darauf hinweisen, dass die Erntemaschine 10 mit einer oberhalb der vorbestimmten Mindestgeschwindigkeit liegenden Vortriebsgeschwindigkeit fährt (und der Bediener über die Bedienerschnittstelle 112 den Mulchbetrieb ausgewählt hat und ein Ernte/Transportbetriebsschalter sich in der Stellung für Erntebetrieb befindet und die Seitenteile 40 abgesenkt sind), oder ein Absenken direkt dann erfolgt, wenn die Erntemaschine 10 sich vorwärts bewegt, sei es basierend auf den Signalen des Geschwindigkeitssensors 114 oder der Signale an der ersten Leitung 104 der vorhergehenden Ausführungsform, wenn diese auf einen Vorwärtsfahrbetrieb hinweisen. Die Steuerung 92 ist, wie in der ersten Ausführungsform der Figur 5, auch mit den Leitungen 106 und 108 verbunden und nutzt deren Signale ebenfalls zum Anheben der Mulchgeräte 50 mittels der Aktoren 74, wenn an der Leitung 106 ein Signal zum Anheben der Seitenteile 40 vorliegt und/oder wenn an der Leitung 108 ein Signal zum Anheben des Erntevorsatzes 20 mittels des Aktors 116 vorliegt und/oder ein Ernte/Transportbetriebsschalter sich in der Stellung für Straßenbetrieb befindet.

Weiterhin ist die Steuerung 92 mit der Höhensteuerung 118 verbunden und veranlasst immer dann (in einer bisher geltende, automatische oder manuelle Vorgaben an die Höhensteuerung übersteuernden Weise) ein Anheben des Erntevorsatzes 20 gegenüber der Erntemaschine 10 durch den Aktor 116, wenn die Mulchgeräte 50 abgesenkt sind und die die Signale des Geschwindigkeitssensors 114 darauf hinweisen, dass die Erntemaschine 10 mit einer unterhalb einer vorbestimmten Mindestgeschwindigkeit liegenden Vortriebsgeschwindigkeit fährt. Dadurch vermeidet man, dass sich die Mulchgeräte bei stehender Erntemaschine 10 im Boden verhaken.

Falls man die in den Figuren 5 und 6 gezeigten pneumatischen Aktoren 74 durch Hydraulikzylinder ersetzen würde, wären die übrigen pneumatischen Komponenten durch hydraulische Bauteile zu ersetzen.

## Patentansprüche

1. Selbstfahrende Erntemaschine (10) mit einem Erntevorsatz (20), an dem ein Mulchgerät (50) angebracht ist, wobei das Mulchgerät (50) folgendes umfasst:
wenigstens ein mittels eines Antriebs in Bewegung versetzbares Bearbeitungswerkzeug (54) zur Zerkleinerung von Pflanzenstümpfen (80),
eine positionsverstellbar am Erntevorsatz (20) angebrachte Halterung des Bearbeitungswerkzeugs (54), und
Mittel zur Kontrolle der Position der Halterung gegenüber dem Erntevorsatz (20), welche einen fremdkraftbetätigten Aktor (74) umfassen, der mit einer Steuerung (92) zur Kontrolle des Aktors (74) verbunden ist,
**dadurch gekennzeichnet, dass** der Aktor (74) zur Kontrolle der Bodenandruckkraft der Halterung während des Erntebetriebs eingerichtet ist, dass die Steuerung (92) mit einer Bedienerschnittstelle (112) verbunden ist, mit welcher die vom Aktor (74) während des Erntebetriebs auf die Halterung ausgeübte Kraft vorgebbar ist und die Steuerung (92) betreibbar ist, den Aktor (74) derart anzusteuern, dass der Aktor (74) mit der vorgegebenen Kraft auf die Halterung einwirkt.

2. Erntemaschine (10) nach Anspruch 1, wobei die Halterung um eine quer zur Vorwärtsrichtung des Erntevorsatzes orientierte Achse am Erntevorsatz (20) angelenkt oder anlenkbar ist, sich rückwärtig der Achse durch Führungsmittel auf dem Boden abstützt, und der Aktor (74) den Schwenkwinkel der Halterung um die Achse kontrolliert.

3. Erntemaschine (10) nach einem der Ansprüche 1 oder 2, wobei die Steuerung (92) mit Signalen von einer Höhensteuerung (118) des Erntevorsatzes (20) beaufschlagbar und betreibbar ist, bei Ausheben des Erntevorsatzes (20) selbsttätig zu veranlassen, dass der Aktor (74) das Mulchgerät (50) gegenüber dem Erntevorsatz (20) in eine gegenüber der beim Erntebetrieb eingenommenen Betriebsposition angehobene Außerbetriebsposition verbringt.

4. Erntemaschine (10) nach einem der Ansprüche 1 bis 3, wobei die Steuerung (92) mit einer Vortriebssteuerung der Erntemaschine (10) und/oder einem Geschwindigkeitssensor (114) zur Erfassung der Vortriebsgeschwindigkeit der Erntemaschine (10) beaufschlagbar und betreibbar ist, bei Rückwärtsfahrt der Erntemaschine (10) und/oder Unterschreiten einer vorgegebenen Mindestvortriebsgeschwindigkeit der Erntemaschine (10) selbsttätig zu veranlassen, dass der Aktor (74) das Mulchgerät (50) gegenüber dem Erntevorsatz (20) in eine gegenüber der beim Erntebetrieb eingenommenen Betriebsposition angehobene Außerbetriebsposition verbringt.

5. Erntemaschine (10) nach einem der Ansprüche 1 bis 4, wobei die Steuerung (92) mit einer Vortriebssteuerung der Erntemaschine (10) und/oder einem Geschwindigkeitssensor (114) zur Erfassung der Vortriebsgeschwindigkeit der Erntemaschine (10) beaufschlagbar und betreibbar ist, bei Rückwärtsfahrt der Erntemaschine (10) und/oder Unterschreiten einer vorgegebenen Mindestvortriebsgeschwindigkeit der Erntemaschine (10) selbsttätig die Höhensteuerung (118) des Erntevorsatzes (20) zu kommandieren, den Erntevorsatz (20) anzuheben.

6. Erntemaschine (10) nach einem der Anspruche 1 bis 5, wobei der Aktor (74) ein pneumatischer oder hydraulischer Zylinder ist.

7. Erntemaschine (10) nach einem der vorhergehenden Ansprüche, wobei ein oder mehrere Bearbeitungswerkzeuge (54) um eine während des Betriebs sich etwa vertikal oder horizontal erstreckende oder um eine nach hinten und oben geneigte Achse an der Halterung drehbar angebracht und durch den Antrieb in Rotation verbringbar sind.

8. Erntemaschine (10) nach einem der vorhergehenden Ansprüche, wobei der Erntevorsatz (20) mehrere Ernteeinheiten (32) aufweist, denen jeweils ein separat positionsverstellbares und mit jeweils einem Aktor (74) ausgestattetes Mulchgerät (50) zugeordnet ist.

9. Erntemaschine (10) nach Anspruch 8, wobei Seitenteile (40) des Erntevorsatzes (20) durch einen Verstellantrieb in eine Transportposition verbringbar sind und die Steuerung (92) mit Signalen für den Verstellantrieb beaufschlagbar und betreibbar ist, bei Aktivierung des Verstellantriebs im Sinne eines Verbringens der Seitenteile (40) des Erntevorsatzes (20) in die Transportposition selbsttätig zu veranlassen, dass die Aktoren (74) ihre Mulchgeräte gegenüber dem Erntevorsatz (20) in eine Außerbetriebsposition verbringen.

## Claims

1. Self-propelling harvesting machine (10) with a harvesting header (20) to which a mulching implement (50) is attached, wherein the mulching implement (50) comprises the following:
at least one processing tool (54), which can be set into movement by means of a drive, for shredding plant stumps (80),
a holder of the processing tool (54), which holder is attached to the harvesting header (20) in a position-adjustable manner, and
means for controlling the position of the holder in relation to the harvesting header (20), which means comprise an externally actuated actuator (74) which is connected to a controller (92) for controlling the actuator (74),
**characterized in that** the actuator (74) is designed for controlling the ground pressing force of the holder during the harvesting mode, **in that** the controller (92) is connected to an operator interface (112) with which the force exerted on the holder by the actuator (74) during the harvesting mode can be predetermined and the controller (92) can be operated to activate the actuator (74) in such a manner that the actuator (74) acts on the holder with the predetermined force.

2. Harvesting machine (10) according to Claim 1, wherein the holder is articulated or can be articulated on the harvesting header (20) about an axis oriented transversely with respect to the forwards direction of the harvesting header, and is supported on the ground to the rear of the axis by guide means, and the actuator (74) controls the pivoting angle of the holder about the axis.

3. Harvesting machine (10) according to either of Claims 1 and 2, wherein the controller (92) can be subjected to and can be operated with signals from a height controller (118) of the harvesting header (20) in order, when the harvesting header (20) is lifted, automatically to cause the actuator (74) to bring the mulching implement (50) in relation to the harvesting header (20) into an inoperative position raised in relation to the operating position adopted during the harvesting mode.

4. Harvesting machine (10) according to one of Claims 1 to 3, wherein the controller (92) can be subjected to and can be operated with a propulsion controller of the harvesting machine (10) and/or a speed sensor (114) for sensing the propulsion speed of the harvesting machine (10), in order, when the harvesting machine (10) is reversed and/or a predetermined minimum propulsion speed of the harvesting machine (10) is fallen short of, automatically to cause the actuator (74) to bring the mulching implement (50) in relation to the harvesting header (20) into an inoperative position raised in relation to the operating position adopted during the harvesting mode.

5. Harvesting machine (10) according to one of Claims 1 to 4, wherein the controller (92) can be subjected to and can be operated with a propulsion controller of the harvesting machine (10) and/or a speed sensor (114) for sensing the propulsion speed of the harvesting machine (10), in order, when the harvesting machine (10) is reversed and/or a predetermined minimum propulsion speed of the harvesting machine (10) is fallen short of, automatically to command the height controller (118) of the harvesting header (20) to raise the harvesting header (20).

6. Harvesting machine (10) according to one of Claims 1 to 5, wherein the actuator (74) is a pneumatic or hydraulic cylinder.

7. Harvesting machine (10) according to one of the preceding claims, wherein one or more processing tools (54) are attached to the holder so as to be rotatable about an axis extending approximately vertically or horizontally or about an axis inclined to the rear and upwards during operation, and can be brought into rotation by the drive.

8. Harvesting machine (10) according to one of the preceding claims, wherein the harvesting header (20) has a plurality of harvesting units (32) which are each assigned a separately position-adjustable mulching implement (50) equipped with a respective actuator (74).

9. Harvesting machine (10) according to Claim 8, wherein side parts (40) of the harvesting header (20) can be brought into a transport position by means of an adjustment drive, and the controller (92) can be subjected to and can be operated with signals for the adjustment drive in order, when the adjustment drive is activated with the effect of bringing the side parts (40) of the harvesting header (20) into the transport position, automatically to cause the actuators (74) to bring their mulching implements into an inoperative position in relation to the harvesting header (20).

## Revendications

1. Récolteuse automotrice (10) comprenant un collecteur (20) sur lequel est monté un dispositif de paillage (50), le dispositif de paillage (50) comprenant :
au moins un outil de traitement (54) pouvant être mis en mouvement au moyen d'un entraînement et destiné à fragmenter des souches de plantes (80),
un support de l'outil de traitement (54), lequel support est monté sur le collecteur (20) à position réglable, et
des moyens de commande de la position du support par rapport au collecteur (20), lesquels moyens comprennent un actionneur (74) actionné par une force extérieure et reliée à une commande (92) destinée à commander l'actionneur (74),
**caractérisée en ce que**
l'actionneur (74) est conçu pour commander la force de pression de sol du support pendant l'opération de récolte,
la commande (92) est reliée à une interface opérateur (112) permettant de spécifier la force exercée par l'actionneur (74) sur le support pendant l'opération de récolte et la commande (92) peut être utilisée pour commander l'actionneur (74) de sorte que l'actionneur (74) agisse sur le support avec la force spécifiée.

2. Récolteuse (10) selon la revendication 1, le support étant articulé ou pouvant être articulé, au niveau du collecteur (20), autour d'un axe orienté transversalement au sens d'avancement du collecteur et s'appuyant sur le sol à l'arrière de l'axe par le biais d'un moyen de guidage, et l'actionneur (74) commandant l'angle de pivotement du support autour de l'axe.

3. Récolteuse (10) selon l'une des revendications 1 et 2, la commande (92) pouvant être soumise à des signaux provenant d'une commande de hauteur (118) du collecteur (20) et pouvant être mise en œuvre pour ordonner automatiquement lors du soulèvement du collecteur (20) que l'actionneur (74) amène le dispositif de paillage (50) dans une position hors fonctionnement soulevée par rapport à la position de fonctionnement occupée pendant l'opération de récolte par rapport au collecteur (20).

4. Récolteuse (10) selon l'une des revendications 1 à 3, la commande (92) pouvant être soumise à une commande d'avancement de la récolteuse (10) et/ou à un capteur de vitesse (114) destiné à détecter la vitesse d'avancement de la récolteuse (10) et pouvant être mise en œuvre pour ordonner automatiquement, lorsque la récolteuse (10) est en marche arrière et/ou lorsque la vitesse de la récolteuse (10) devient inférieure à une vitesse d'avancement minimale, que l'actionneur (74) amène le dispositif de paillage (50) dans une position hors fonctionnement soulevée par rapport à la position de fonctionnement occupée pendant l'opération de récolte par rapport au collecteur (20).

5. Récolteuse (10) selon l'une des revendications 1 à 4, la commande (92) pouvant être soumise à une commande d'avancement de la récolteuse (10) et/ou à un capteur de vitesse (114) destiné à détecter la vitesse d'avancement de la récolteuse (10) et pouvant être mise en œuvre pour ordonner automatiquement, lorsque la récolteuse (10) est en marche arrière et/ou lorsque la vitesse de la récolteuse (10) devient inférieure à une vitesse d'avancement minimale, à la commande de hauteur (118) du collecteur (20) de soulever le collecteur (20).

6. Récolteuse (10) selon l'une des revendications 1 à 5, l'actionneur (74) étant un cylindre pneumatique ou hydraulique.

7. Récolteuse (10) selon l'une des revendications précédentes, au moins un outil de traitement (54) étant monté sur le support de manière rotative autour d'un axe s'étendant pendant le fonctionnement à peu près verticalement ou horizontalement ou autour d'un axe incliné vers l'arrière et vers le haut, et étant mis en rotation par l'entraînement.

8. Récolteuse (10) selon l'une des revendications précédentes, la récolteuse (20) comportant une pluralité d'unités de récolte (32) à chacune desquelles est associé un dispositif de paillage (50) qui est réglable en position et équipé d'un actionneur (74).

9. Récolteuse (10) selon la revendication 8, les éléments latéraux (40) du collecteur (20) pouvant être amenés dans une position de transport par un entraînement de réglage et la commande (92) pouvant être soumise à des signaux destinés à l'entraînement de réglage et pouvant être mise en œuvre pour ordonner automatiquement, lors de l'activation de l'entraînement de réglage dans le sens du passage des parties latérales (40) du collecteur (20) en position de transport, que les actionneurs (74) passent leur dispositifs de paillage par rapport au collecteur (20) dans une position hors fonctionnement.
